Europäisches Patentamt

(19) European Patent Office

Office européen des brevets

(11) Numéro de publication : **0 296 936 B1**

## (12) FASCICULE DE BREVET EUROPEEN

(45) Date de publication du fascicule du brevet :
**21.08.91 Bulletin 91/34**

(51) Int. Cl.⁵ : **B64G 1/64, F42B 3/00**

(21) Numéro de dépôt : **88401467.1**

(22) Date de dépôt : **14.06.88**

(54) **Mécanisme de commande d'écartement rapide et contrôle de deux pièces en contact.**

(30) Priorité : **16.06.87 FR 8708359**

(43) Date de publication de la demande :
**28.12.88 Bulletin 88/52**

(45) Mention de la délivrance du brevet :
**21.08.91 Bulletin 91/34**

(84) Etats contractants désignés :
**AT BE CH DE ES GB IT LI NL SE**

(56) Documents cités :
**WO-A-82/02527
US-A- 2 888 294
US-A- 3 196 745
US-A- 3 887 150**

(73) Titulaire : **AEROSPATIALE Société Nationale Industrielle
37, Boulevard de Montmorency
F-75781 Paris Cédex 16 (FR)**

(72) Inventeur : **Carel, Claude
6, Villepreux Village
F-33160 Saint Aubin de Medoc (FR)**
Inventeur : **Lesineau, Bernard
42, Villepreux Village
F-33160 Saint Aubin de Medoc (FR)**
Inventeur : **Spariat, Jacques
8, Avenue Eugène Delacroix
F-33160 Saint Médard en Jalles (FR)**

(74) Mandataire : **Mongrédien, André et al
c/o SOCIETE DE PROTECTION DES INVENTIONS 25, rue de Ponthieu
F-75008 Paris (FR)**

## Description

L'invention concerne un mécanisme pour commander l'écartement rapide de deux pièces en contact, avec une vitesse et une accélération contrôlées, à partir d'une énergie motrice stockée surabondante, qui peut notamment, quoique non exclusivement, être fournie par un dispositif pyrotechnique en régime détonique.

L'invention s'applique avantageusement à la séparation et à l'éjection des pièces dans les engins spatiaux. De façon plus générale, elle concerne tous les mécanismes de mise en mouvement, lorsqu'ils demandent promptitude et précision, qu'ils remplissent ou non la fonction de séparation des pièces. Enfin, l'invention concerne tous les dispositifs pouvant être animés par une charge pyrotechnique, car elle permet d'exploiter de façon rapide et contrôlée les effets mécaniques de type onde de choc, ainsi que les effets thermodynamiques produits par la détonation de la charge.

Dans l'état actuel de la technique, l'écartement de deux pièces en contact, c'est-à-dire généralement l'éjection d'une pièce à partir d'une autre, est commandé par un dispositif de mise en pression qui peut être un dispositif pneumatique, hydraulique ou mécanique. Ce dispositif peut notamment être un vérin à gaz, comme l'illustre le document US-A-4554905, un dispositif pyrotechnique fonctionnant en régime de combustion, un vérin à combustion de poudre, ou encore un mécanisme à ressort précontraint.

Lors de la fabrication de ces dispositifs existants, on peut réaliser un dosage précis de l'énergie motrice, dans le but de contrôler les paramètres caractéristiques de l'éjection que sont la vitesse et l'accélération. Cependant, quelle que soit la nature du dispositif (pneumatique, hydraulique ou mécanique), il existe dans tous les cas une diminution au cours du temps de l'énergie stockée. Dans le cas d'un dispositif pneumatique ou hydraulique, cette diminution peut résulter de l'apparition d'une fuite. Dans le cas d'un dispositif mécanique, elle s'explique par le vieillissement du ressort maintenu sous contrainte. Lorsque les dispositifs de commande d'éjection existants doivent être stockés pendant une durée indéterminée pouvant atteindre plusieurs années après leur fabrication, ce qui n'est pas rare, il est donc pratiquement impossible de contrôler la vitesse et l'accélération au moment de l'éjection.

Par ailleurs, aucun dispositif existant ne permet actuellement de commander l'écartement rapide et contrôlé de deux pièces à partir de l'énergie fournie par un dispositif pyrotechnique fonctionnant en régime détonique.

En outre, les fonctions de séparation et d'éjection de deux pièces en contact sont généralement réalisées par des dispositifs totalement séparés. Plus précisément, aux dispositifs connus qui viennent d'être mentionnés pour assurer l'éjection sont généralement associés des dispositifs de séparation distincts tels que des boulons explosifs, des découpeurs à charge diélectrique ou des systèmes pyromécaniques de déverrouillage par effacement d'une butée. Des dispositifs de séparation actionnés par un vérin à gaz ou par une énergie d'une autre nature sont également connus.

La présente invention a principalement pour objet un mécanisme permettant de commander l'écartement de deux pièces en contact, c'est-à-dire de remplir la fonction d'éjection, en maîtrisant parfaitement la vitesse et l'accélération qui constituent les paramètres essentiels de l'éjection, à partir d'une énergie motrice stockée surabondante, qui peut être pyrotechnique (régime détonique), pneumatique, hydraulique ou mécanique, sans que ces paramètres soient altérés par le stockage du mécanisme pendant une durée indéterminée.

Secondairement, l'invention a aussi pour objet un mécanisme unique permettant à la fois de remplir les fonctions de séparation et d'éjection.

Le premier objectif de l'invention est atteint grâce à un mécanisme pour commander l'écartement de deux pièces en contact par une force d'intensité donnée, à partir d'une énergie motrice surabondante, qui comprend un organe de poussée apte à se déplacer dans une première des pièces vers la deuxième pièce, à partir d'une position de repos dans laquelle une extrémité de l'organe de poussée est en contact avec la deuxième pièce, un organe moteur apte à se déplacer avec une course donnée entre une position de repos et une position d'actionnement à l'intérieur de la première pièce, sous l'effet de ladite énergie motrice, et un élément élastique interposé entre l'organe moteur et l'organe de poussée, de telle sorte qu'un déplacement de l'organe moteur de sa position de repos à sa position d'actionnement a pour effet d'appliquer ladite force d'intensité donnée sur la deuxième pièce, par l'intermédiaire de l'organe de poussée.

Dans ce mécanisme, les paramètres vitesse et accélération sont dosés par le passage dans l'élément élastique d'une partie bien déterminée de l'énergie motrice surabondante appliquée à l'organe moteur. Le reste de cette énergie est absorbé par la venue en butée de l'organe moteur contre la première pièce lorsque cet organe arrive en position d'actionnement.

Le mécanisme selon l'invention peut également comprendre des moyens de verrouillage de l'organe de poussée en position de repos à l'intérieur de la première pièce et des moyens pour commander automatiquement le déverrouillage des moyens de verrouillage lorsque l'organe moteur occupe sa position d'actionnement. On est ainsi assuré que l'énergie emmagasinée dans l'élément élastique n'est restituée qu'à la fin de la course de l'organe moteur.

De préférence, l'organe moteur comprend un piston apte à coulisser de façon étanche dans un alésage formé dans la première pièce, ladite énergie motrice étant créée par un dispositif pyrotechnique fonctionnant en régime détonique et agissant dans ledit alésage, d'un côté du piston moteur opposé à l'élément élastique.

Dans ce dernier cas, les moyens de verrouillage comprennent de préférence un piston de verrouillage apte à se déplacer dans la première pièce entre une position de verrouillage bloquant l'organe de poussée en position de repos et une position de déverrouillage libérant l'organe de poussée, les moyens de commande de déverrouillage comprenant un passage reliant ledit alésage à une chambre délimitée dans la première pièce et par une face du piston de verrouillage, une augmentation de pression dans cette chambre ayant pour effet un déplacement du piston de verrouillage en position de déverrouillage, ledit passage débouchant dans ledit alésage en un emplacement tel qu'il n'est situé du côté du piston moteur opposé à l'élément élastique que lorsque ce piston moteur est en position d'actionnement.

Conformément à un premier mode de réalisation de l'invention, le piston de verrouillage est mobile dans la première pièce selon une direction approximativement perpendiculaire à une direction de déplacement de l'organe de poussée à partir de sa position de repos, ce piston de verrouillage comprenant un doigt qui bloque l'organe de poussée dans cette position de repos lorsque le piston de verrouillage est en position de verrouillage.

Dans un deuxième mode de réalisation de l'invention, le piston de verrouillage est un piston annulaire entourant l'organe de poussée et mobile dans la première pièce selon une direction approximativement parallèle à une direction de déplacement de l'organe de poussée à partir de sa position de repos, ce piston annulaire encerclant au moins un organe de blocage monté dans la première pièce, de façon à maintenir cet organe de blocage en prise sur l'organe de poussée, lorsque le piston annulaire est en position de verrouillage.

L'organe moteur et l'organe de poussée sont de préférence montés coaxialement à l'intérieur de la première pièce.

L'élément élastique peut notamment être un ressort de compression interposé entre l'organe moteur et l'organe de poussée. Ces deux organes sont alors disposés bout à bout à l'intérieur de la première pièce.

L'élément élastique peut aussi être une capacité gazeuse. L'organe moteur peut alors comprendre un piston annulaire coulissant de façon étanche dans un espace annulaire formé dans la première pièce autour d'un organe tubulaire monté coaxialement audit piston annulaire, la position d'actionnement de ce piston annulaire étant plus éloignée de la deuxième pièce que sa position de repos, l'organe de poussée comprenant un piston de poussée coulissant de façon étanche dans un alésage central formé dans ledit organe tubulaire, la capacité gazeuse étant constituée de parties de l'espace annulaire et de l'alésage central situées respectivement du côté du piston annulaire et du piston de poussée, le plus éloigné de la deuxième pièce, lesdites parties communiquant entre elles par au moins un trou formé dans l'organe tubulaire.

Afin que le mécanisme selon l'invention remplisse également la fonction de séparation des deux pièces, la première pièce peut comprendre un organe tubulaire entourant l'organe de poussée et dont une extrémité adjacente à la deuxième pièce est normalement en prise sur un organe de liaison porté par la deuxième pièce, lorsqu'une partie tubulaire de séparation montée dans la première pièce encercle cet organe de liaison, ladite partie tubulaire de séparation étant sensible à l'énergie motrice pour se déplacer en éloignement de la deuxième pièce et libérer l'organe de liaison.

Dans le cas où l'organe moteur comprend un piston annulaire, la partie tubulaire de séparation est de préférence solidaire de ce piston.

Au contraire, dans le cas où le piston de verrouillage est un piston annulaire, la partie tubulaire de séparation est solidaire de ce piston de verrouillage.

Plusieurs modes de réalisation de l'invention vont maintenant être décrits, à titre d'exemples nullement limitatifs, en se référant aux dessins annexés dans lesquels :

— la figure 1 est une vue en coupe longitudinale d'un mécanisme selon l'invention permettant de remplir la fonction d'éjection mais ne remplissant pas la fonction de séparation des deux pièces entre lesquelles il est placé ;

— la figure 2 est une vue en coupe longitudinale d'un mécanisme conforme à l'invention et remplissant simultanément les fonctions de séparation et d'éjection ;

— les figures 3a à 3c représentent de façon schématique le mécanisme de la figure 2 dans des positions successives occupées par les différentes pièces qui le constituent, lors de son actionnement ;

— la figure 4 est une vue en coupe longitudinale illustrant un autre mode de réalisation d'un mécanisme conforme à l'invention et remplissant à la fois les fonctions de séparation et d'éjection ; et

— les figures 5a et 5b sont des vues en coupe représentant schématiquement le mécanisme de la figure 4 et illustrant les positions successives prises par les pièces qui le constituent, lors de son actionnement.

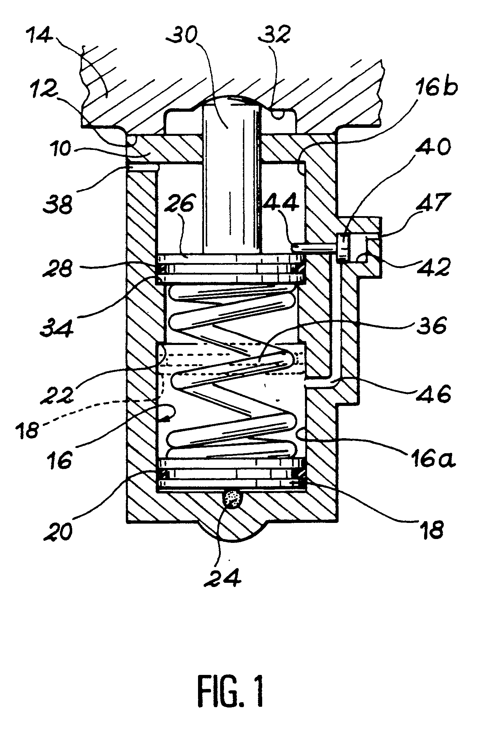

Sur la figure 1, on a représenté une pièce 10 qui est maintenue en contact selon une surface plane 12 avec une deuxième pièce 14 dont une partie seulement apparaît sur la figure. Dans ce cas, le maintien en contact des deux pièces est assuré par un ou plusieurs mécanismes séparés (non représentés), qui peuvent être d'un quelconque type connu.

Dans l'exemple de réalisation représenté sur la figure 1, le mécanisme selon l'invention, qui permet de commander l'écartement des pièces 10 et 14, est logé en totalité à l'intérieur de la pièce 10. A cet effet, cette dernière présente un alésage 16 dont l'axe est approximativement perpendiculaire à la surface de jonction 12 des deux pièces.

On appelle respectivement partie arrière 16a et partie avant 16b les parties de l'alésage 16 la plus éloignée et la plus proche de la pièce 14. On voit sur la figure 1 qu'un organe moteur 18 ayant la forme d'un piston est monté coulissant de façon étanche dans la partie arrière 16a de l'alésage. L'étanchéité de ce coulissement est assurée par un joint torique 20 reçu dans une gorge ménagée à la périphérie du piston 18.

Au repos, le piston moteur 18 est en butée contre l'extrémité fermée de l'alésage 16 la plus éloignée de la pièce 14, comme l'illustre la figure 1. A partir de cette position de repos, le piston 18 peut coulisser vers la pièce 14 jusqu'à sa venue en butée contre un épaulement 22 formé sur une partie de plus petit diamètre séparant les parties 16a et 16b de l'alésage 16. La position correspondante du piston 18, appelée position d'actionnement, est représentée en traits discontinus sur la figure 1.

L'espace délimité à l'intérieur de l'alésage 16 entre la face du piston 18 la plus éloignée de la pièce 14 et l'extrémité fermée de l'alésage 16 constitue une chambre de détonation dans laquelle sont reçus les gaz de combustion libérés par l'explosion d'une charge pyrotechnique 24 située dans cette chambre. Plus précisément, la charge 24 est montée dans la partie de la pièce 10 qui obture l'extrémité de l'alésage 16.

Un second piston 26 est monté coulissant de manière étanche dans la partie avant 16b de l'alésage 16. Ce piston 26 est pourvu à sa périphérie d'une gorge annulaire dans laquelle est reçu un joint d'étanchéité annulaire 28 en contact avec la surface intérieure de l'alésage 16.

Sur sa face située en regard de la pièce 14, le piston 26 porte une tige de poussée 30 qui fait saillie selon l'axe de l'alésage 16 au travers de l'extrémité fermée de cet alésage adjacente à la pièce 14. Cette tige 30 est en contact par son extrémité arrondie avec le fond d'un évidement 32 ménagé dans la pièce 14 dans le prolongement de l'alésage 16.

Plus précisément, lorsque les pièces 10 et 14 sont en contact par la surface 12 et lorsque l'extrémité de la tige de poussée 30 est en contact avec le fond de l'évidement 32, le piston 26 occupe une position de repos dans laquelle il est en appui contre un épaulement 34 formé, comme l'épaulement 22, sur la partie de petit diamètre séparant les parties 16a et 16b de l'alésage 16. Cet épaulement 34 empêche tout déplacement du piston 26 en éloignement de la pièce 14.

L'ensemble constitué par le piston 26 et par la tige 30 constitue un organe de poussée dont le déplacement commande l'éjection de la pièce 10 ou de la pièce 14, d'une manière qui sera décrite ultérieurement.

Conformément à l'invention, un élément élastique constitué ici par un ressort de compression 36 est également placé dans l'alésage 16, entre les pistons 26 et 18, de telle sorte que ses extrémités sont respectivement en appui sur chacun de ces pistons. Lorsque les pistons 18 et 26 occupent leur position de repos représentée en trait plein sur la figure 1, le ressort 36 n'est pratiquement pas précontraint.

Afin de ne pas entraver le déplacement du piston 26 dans la partie avant de l'alésage 16, un ou plusieurs trous 38 peuvent être formés dans la pièce 10 pour mettre en communication avec l'extérieur la chambre délimitée dans l'alésage 16, du côté du piston 26 tourné vers la pièce 14.

Dans l'exemple de réalisation représenté sur la figure 1, le mécanisme d'éjection comprend de plus des moyens permettant de verrouiller le piston 26 dans sa position de repos tant que le piston moteur 18 n'a pas atteint sa position d'actionnement et des moyens de commande automatique du déverrouillage des moyens de verrouillage lorsque le piston moteur 18 arrive en position d'actionnement.

Ces moyens de verrouillage comprennent ici un piston de verrouillage 40 monté coulissant dans un alésage 42 d'axe perpendiculaire à l'axe de l'alésage 16, formé dans la pièce 10. Ce piston 40 porte selon son axe une tige de verrouillage 44 qui débouche dans la partie avant 16b de l'alésage 16 lorsque le mécanisme est au repos. Plus précisément, comme l'illustre la figure 1, l'extrémité de la tige de verrouillage 44 est alors placée contre la face du piston 26 tournée vers la pièce 14, de sorte qu'elle empêche tout déplacement du piston 26 vers cette pièce. Le maintien du piston 40 dans cette position peut être assuré par un ressort de compression faiblement taré (non représenté).

Afin de commander le déverrouillage automatique du piston 26, la partie de l'alésage 42 située du côté de la tige de verrouillage 44 communique par un passage 46 avec la partie arrière 16a de l'alésage 16. Plus précisément, le passage 46 débouche en un point de l'alésage 16 situé au niveau de la face du piston 18 opposée à la pièce 14, lorsque le piston 18 occupe sa position d'actionnement. L'accroissement de pression dans la chambre de détonation résultant de l'explosion de la charge 24 n'est donc transmis au piston de verrouillage 40 que lorsque le piston 18 arrive en butée contre l'épaulement 22.

Le déplacement du piston 40 à l'intérieur de l'alésage 42 est rendu possible par le fait qu'un ou plusieurs trous 47 sont ménagés dans la pièce 10 pour mettre en communication avec l'extérieur la partie de l'alésage 42 située du côté du piston 40 opposé à la tige de verrouillage 44.

Avant l'explosion de la charge 24, le mécanisme d'éjection de la figure 1 occupe la position représentée sur cette figure.

Lors de l'explosion de la charge 24, les gaz libérés par l'explosion augmentent la pression dans la chambre de détonation, ce qui a pour effet de déplacer le piston moteur 18 vers la pièce 14 à l'intérieur de la partie 16a de l'alésage 16. Tant que le piston 18 n'arrive pas dans sa position d'actionnement représentée en traits discontinus sur la figure 1, son déplacement est sans effet sur le piston 40 qui verrouille en position de repos le piston 26. Tout au long de la course du piston 18, le déplacement de celui-ci a donc pour seule conséquence de comprimer le ressort 36 entre les pistons 18 et 26.

Dès que le piston 18 arrive dans sa position d'actionnement, la chambre de détonation est reliée par le passage 46 à la face du piston de verrouillage 40 portant la tige 44. Instantanément, l'ensemble constitué par le piston 40 et la tige 44 est repoussé vers la droite en considérant la figure 1, ce qui a pour effet de dégager l'extrémité de la tige 44 de l'alésage 16. Le piston 26 est immédiatement déverrouillé et la force d'intensité bien déterminée qui a été emmagasinée précédemment dans le ressort 36 est restituée pour déplacer l'organe de poussée constitué par le piston 26 et sa tige 30 vers la pièce 14. L'écartement rapide des pièces 10 et 14 est ainsi obtenu avec des paramètres de vitesse et d'accélération bien déterminés.

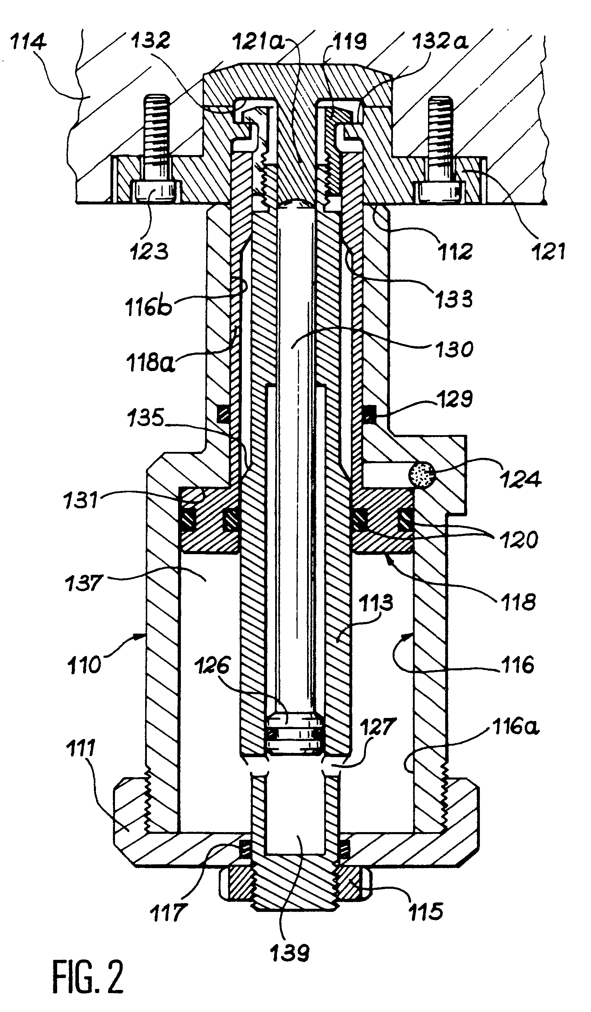

Sur la figure 2, on a représenté un autre mode de réalisation d'un mécanisme conforme à l'invention. Ce mécanisme se distingue principalement du précédent par le fait qu'il remplit à la fois les fonctions de séparation et d'éjection des deux pièces entre lesquelles il est placé. Pour faciliter l'exposé, les éléments remplissant des fonctions identiques à ceux du mode de réalisation de la figure 1 sont désignés par les mêmes chiffres de référence augmentés de 100.

On reconnaît sur la figure 2 les pièces 110 et 114 qui sont en contact par la surface plane 112. La pièce 110 est percée d'un alésage 116 selon une direction approximativement perpendiculaire à la surface 112. Du côté opposé à la pièce 114, l'alésage 116 est obturé de façon étanche par un couvercle vissé 111 traversé en son centre par un organe tubulaire 113 disposé coaxialement à l'intérieur de l'alésage 116. Cet organe tubulaire 113 est fermé à son extrémité la plus éloignée de la pièce 114, sur laquelle est vissé un écrou 115 normalement en appui sur la face extérieure du couvercle 111. Comme on le verra ultérieurement, l'organe tubulaire 113 traverse le couvercle 111 de façon à pouvoir se déplacer selon son axe en éloignement de la pièce 114. L'étanchéité de la traversée du couvercle 111 par l'organe tubulaire 113 est assurée par un joint annulaire 117 logé dans une gorge prévue dans le couvercle.

A son extrémité adjacente à la pièce 114, l'organe tubulaire 113 se termine par une partie filetée sur laquelle est vissé un écrou fendu 119. Cet écrou 119 est placé dans un évidement 132 formé dans une pièce 121 rapportée sur la pièce 114 par exemple au moyen de vis 123. Plus précisément, l'écrou 119 est pourvu d'une tête qui est normalement en appui sur un épaulement 132a formé dans l'évidement 132 et tourné vers le fond de cet évidement. Grâce à l'agencement qui vient d'être décrit, les pièces 110 et 114 sont normalement solidarisées l'une de l'autre par l'appui de la tête de l'écrou 119 sur l'épaulement 132a et l'appui de l'écrou 115 sur le couvercle 111.

Dans sa partie arrière 116a la plus éloignée de la pièce 114, l'alésage 116 présente un diamètre plus grand que dans sa partie avant 116b la plus proche de la pièce 114. Ces deux parties délimitent entre elles un épaulement 131. L'espace annulaire délimité entre la partie arrière 116a de l'alésage 116 et l'organe tubulaire 113 reçoit en coulissement de façon étanche un piston moteur 118 de forme annulaire. L'étanchéité est assurée par des joints 120 logés dans des gorges annulaires formées sur les bords périphériques extérieur et intérieur du piston et coopérant respectivement avec la surface intérieure de l'alésage 116 et la surface extérieure de l'organe tubulaire 113.

Le piston moteur 118 se prolonge dans l'espace annulaire délimité entre la partie avant 116b de l'alésage 116 et la partie correspondante de l'organe tubulaire 113, sous la forme d'une partie tubulaire 118a. L'extrémité de cette partie 118a adjacente à la pièce 114 encercle la partie de l'écrou fendu 119 vissée sur l'extrémité filetée de l'organe tubulaire 113, lorsque le piston 118 occupe sa position de repos illustrée sur la figure 2. Dans cette position de repos, le piston 118 est en appui contre l'épaulement 131. Ainsi, l'écrou fendu 119 est maintenu en prise sur l'extrémité filetée de l'organe tubulaire par l'extrémité de la partie 118a du piston 118 et les pièces 110 et 114 sont solidarisées de la manière décrite précédemment.

Dans le mode de réalisation de la figure 2, la chambre de détonation est une chambre annulaire située entre l'épaulement 131 de l'alésage 116 et la face du piston 118 tournée vers la pièce 114. La charge explosive 124 montée dans la pièce 110 est donc située dans cette chambre. Du côté de la pièce 114, l'étanchéité de cette chambre est assurée par un joint annulaire 129 monté dans une gorge formée dans la partie 116b de l'alésage 116.

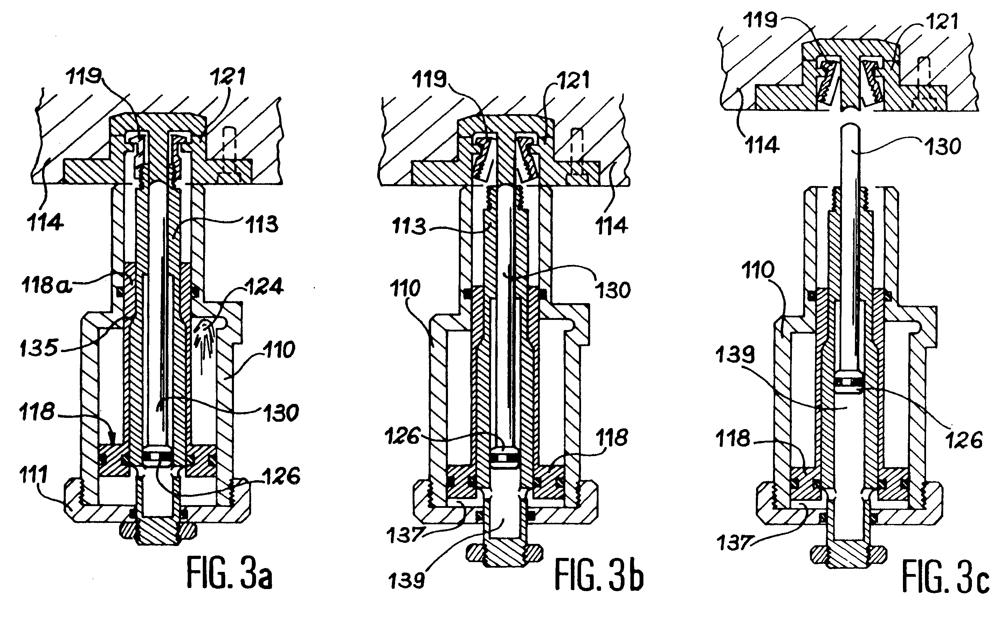

Sous l'effet de l'explosion de la charge 124, le piston 118 se déplace en éloignement de la pièce 114 jusqu'à sa venue en butée contre le couvercle 111. Un peu avant cette venue en butée, dans une position illustrée sur la figure 3a, des épaulements en vis-à-vis 133 et 135 formés respectivement à l'intérieur de la partie tubulaire 118a et à l'extérieur de l'organe tubulaire 113 viennent en appui l'un sur l'autre. Etant donné que l'organe tubulaire 113 dispose d'une course limitée selon son axe en éloignement de la pièce 114, lorsque l'écrou 119 n'est plus en prise sur son extrémité filetée, le piston 118 entraîne donc l'organe tubulaire 113 avec lui dans la dernière partie de sa course.

Comme dans le mode de réalisation précédent, le mécanisme comprend de plus un piston de poussée 126 monté coulissant de façon étanche à l'intérieur de l'organe tubulaire 113, selon l'axe commun à l'alésage 116 et à cet organe. Le piston 126 est prolongé selon son axe, en direction de la pièce 114, par une tige de poussée 130. L'extrémité de cette tige 130 est normalement en appui sur une partie centrale en saillie 121a de la pièce 121 fixée sur la pièce 114 lorsque le piston 126 occupe sa position arrière de repos illustrée sur la figure 2. Cette position peut être fixée par un épaulement (non représenté) formé à cet effet dans l'organe tubulaire 113.

Des trous 127 traversent l'organe tubulaire 113 en arrière de cet épaulement, c'est-à-dire du côté de la face du piston 126 opposée à la pièce 114. Ces trous 127 font communiquer la chambre annulaire 137 formée entre le piston 118 et le couvercle 111 avec la chambre 139 formée entre le piston 126 et l'extrémité fermée de l'organe tubulaire 113. Ces deux chambres sont remplies de gaz sous pression formant une capacité gazeuse constituant l'élément élastique conforme à l'invention.

Le fonctionnement du mécanisme qui vient d'être décrit en se référant à la figure 2 va maintenant être expliqué en référence aux figures 3a à 3c.

Comme l'illustre la figure 3a, l'explosion de la charge 124 a d'abord pour effet de déplacer le piston 118 en éloignement de la pièce 114. De ce fait, l'extrémité de la partie 118a du piston 118 qui encerclait initialement la partie de l'écrou fendu 119 vissée sur l'extrémité filetée de l'organe tubulaire 113 se trouve dégagée de l'écrou 119. La figure 3a illustre précisément la position intermédiaire du piston 118 correspondant à sa venue en butée contre l'épaulement 135 formé sur l'organe tubulaire 113.

A partir de cette venue en butée et comme l'illustre la figure 3b, le piston 118 entraîne dans son déplacement en éloignement de la pièce 114 l'organe tubulaire 113. Il est à noter que ce déplacement est rendu possible par le fait que l'écrou fendu 119 n'est plus maintenu en prise sur l'extrémité filetée de l'organe tubulaire 113. La phase de séparation des deux pièces 110 et 114 réalisée par le mécanisme est alors accomplie.

La figure 3c illustre plus précisément la réalisation de la phase d'éjection qui se superpose en réalité en partie avec la phase de séparation décrite précédemment. En effet, en supposant que le piston de poussée 126 reste immobile pendant la majorité du déplacement du piston 118, la capacité gazeuse emprisonnée entre ces deux pistons dans les chambres 137 et 139 emmagasine une énergie bien déterminée. Cette énergie est restituée dès que les pièces 110 et 114 sont séparées, sous la forme d'une force d'intensité contrôlée qui est appliquée sur le piston 126. Cette force est transmise à la pièce 114 par la tige de poussée 130, de sorte que les paramètres vitesse et accélération caractéristiques de l'éjection sont dosés comme dans le mode de réalisation de la figure 1.

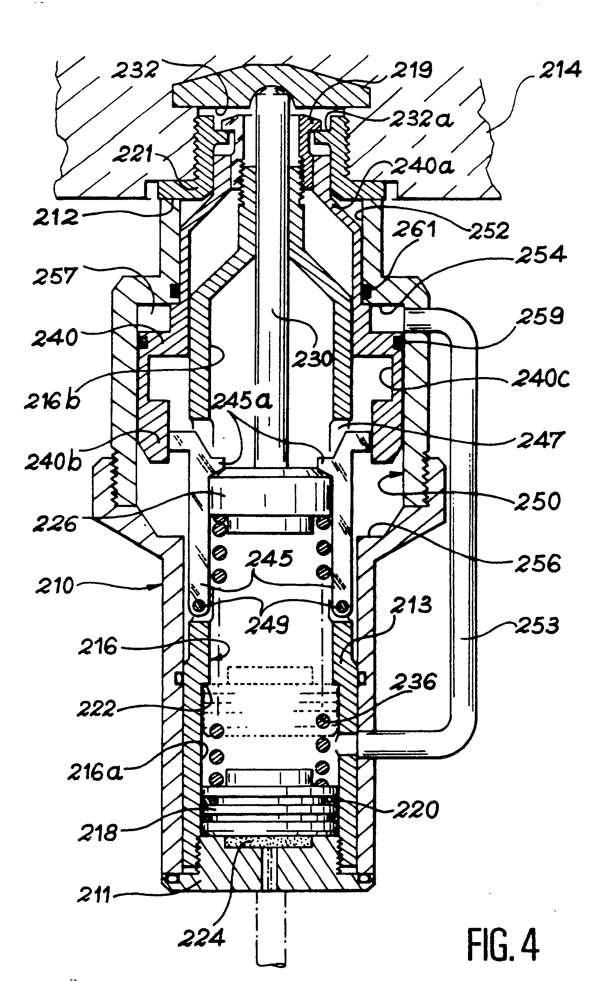

Un autre mode de réalisation du mécanisme selon l'invention va maintenant être décrit en se référant à la figure 4. Pour simplifier l'exposé, les éléments du mécanisme de la figure 4 comparables à ceux du mécanisme décrit précédemment en se référant à la figure 2 sont désignés par les mêmes numéros de référence augmentés de 100.

Comme précédemment, le mécanisme selon l'invention est logé dans une pièce 210 qui est en contact avec une pièce 214 par une surface de jonction plane 212. Plus précisément, la pièce 210 est traversée par un alésage 250 dont l'axe est approximativement perpendiculaire à la surface 212. Cet alésage 250 est obturé à son extrémité la plus éloignée de la pièce 214 par un couvercle 211 sur lequel est vissé un organe tubulaire 213 monté coaxialement à l'intérieur de l'alésage 250.

L'organe 213 est traversé selon son axe par un alésage 216 dont la partie arrière 216a délimitée entre le couvercle 211 et un épaulement 222 reçoit en coulissement de façon étanche un piston moteur 218. L'étanchéité est assurée par un joint 220. La position de repos de ce piston 218, illustrée en trait plein sur la figure 4, correspond à sa venue en butée contre le couvercle 211. Le piston 218 dispose d'une course limitée vers la pièce 214, jusqu'à sa venue en butée contre l'épaulement 222. La position correspondante du piston 218, dite position d'actionnement, est représentée en traits discontinus sur la figure 4.

Dans sa partie avant 216b la plus proche de la pièce 214, l'alésage 216 reçoit en coulissement un piston de poussée 226. Ce piston 226 est prolongé selon son axe du côté de la pièce 214 par une tige de poussée 230 dont l'extrémité est en appui dans le fond d'un évidement 232 formé dans la pièce 214, lorsque le piston 226 occupe sa position de repos représentée sur la figure 4. La tige de poussée est guidée à proximité de la pièce 214 par une partie de diamètre réduit de l'organe tubulaire 213.

La position de repos du piston 226 est déterminée par la venue en appui de ce piston contre des ergots 245a formés sur au moins deux doigts 245 articulés sur l'organe tubulaire 213. Plus précisément, chaque doigt 245 est logé dans une lumière longitudinale 247 formée dans l'organe 213 et articulé sur cet organe, à son extrémité la plus éloignée de la pièce 214, par un axe 249 orthogonal à l'axe commun aux pistons 218 et 226. Les ergots 245a font normalement saillie à l'intérieur de l'alésage 216, sous l'effet de moyens de verrouillage qui seront décrits ultérieurement, pour servir de butée au piston 226.

Comme dans le mode de réalisation de la figure 1, l'élément élastique qui est interposé conformément à l'invention entre les pistons 218 et 226 est un ressort de compression hélicoïdal 236 dont les extrémités sont respectivement en appui sur chacun de ces pistons. Ce ressort 236 plaque normalement le piston 218 contre le couvercle 211 et le piston 226 contre les ergots 245a.

Sur sa surface extérieure, l'extrémité de la partie de diamètre réduit de l'organe tubulaire 213 adjacente à la pièce 214 est pourvue d'un filetage sur lequel est vissé un écrou fendu 219. La tête de cet écrou 219 est en appui sur un épaulement 232a tourné vers le fond de l'évidement 232. Cet épaulement 232a est formé sur une pièce rapportée 221 vissée dans l'évidement 232. La coopération de la tête de l'écrou 219 avec cet épaulement 232a est telle que les pièces 210 et 214 sont maintenues en contact par la surface 212 lorsque l'écrou 219 est vissé sur l'extrémité filetée de l'organe tubulaire 213.

Un piston annulaire de verrouillage 240 est monté coulissant dans un espace annulaire délimité entre une partie de plus grand diamètre de l'alésage 250 proche de la pièce 214, et la surface extérieure de l'organe tubulaire 213. Ce piston 240 peut se déplacer entre une position de repos illustrée sur la figure 4 et une position de déverrouillage. Dans sa position de repos, le piston 240 est en appui contre un épaulement 254 formé dans l'alésage 250 et orienté du côté opposé à la pièce 214. La position de déverrouillage du piston 240, plus éloignée de la pièce 214, est déterminée par un deuxième épaulement 256 de l'alésage 250, tourné vers la pièce 214.

Sur sa face tournée vers la pièce 214, le piston 240 est prolongé par une partie tubulaire 240a dont l'extrémité encercle la partie de l'écrou fendu 219 qui est vissée sur l'extrémité de l'organe tubulaire 213, lorsque le piston 240 occupe sa position de repos représentée sur la figure 4.

Sur sa face opposée à la pièce 214, le piston de verrouillage 240 est prolongé par une autre partie tubulaire 240b qui encercle l'extrémité des doigts 245 la plus proche de la pièce 214 lorsque le piston 240 est dans sa position de repos. A proximité immédiate du piston 240, la partie tubulaire 240b présente un évidement intérieur 240c qui permet aux doigts 245 de pivoter vers l'extérieur autour de leurs axes 249 lorsque leurs extrémités se trouvent en face de cet évidement.

Le mécanisme de la figure 4 comprend également un tube 253 situé à l'extérieur de la pièce 210 et constituant un passage par lequel la partie 216a de l'alésage 216 communique avec une chambre annulaire 257 délimitée entre l'épaulement 254 et le piston 240. Plus précisément, le tube 253 débouche dans l'alésage 216 au niveau de la face du piston 218 opposée à la pièce 214 lorsque ce piston occupe sa position d'actionnement représentée en traits discontinus sur la figure 4. L'étanchéité de la chambre 257 est assurée par un joint 259 reçu dans une gorge formée à la périphérie du piston 240 et par un joint 261 reçu dans une gorge formée à la périphérie de la partie tubulaire 252.

Comme dans le cas de la figure 1, l'énergie motrice est fournie au mécanisme par une charge pyrotechnique 224 portée par le couvercle 211 et logée dans une chambre de détonation délimitée entre le piston 218 et le couvercle 211.

Lorsque cette charge 224 explose, le piston 218 se déplace de sa position de repos à sa position d'actionnement. Le ressort 236 se comprime alors et emmagasine une force d'intensité donnée.

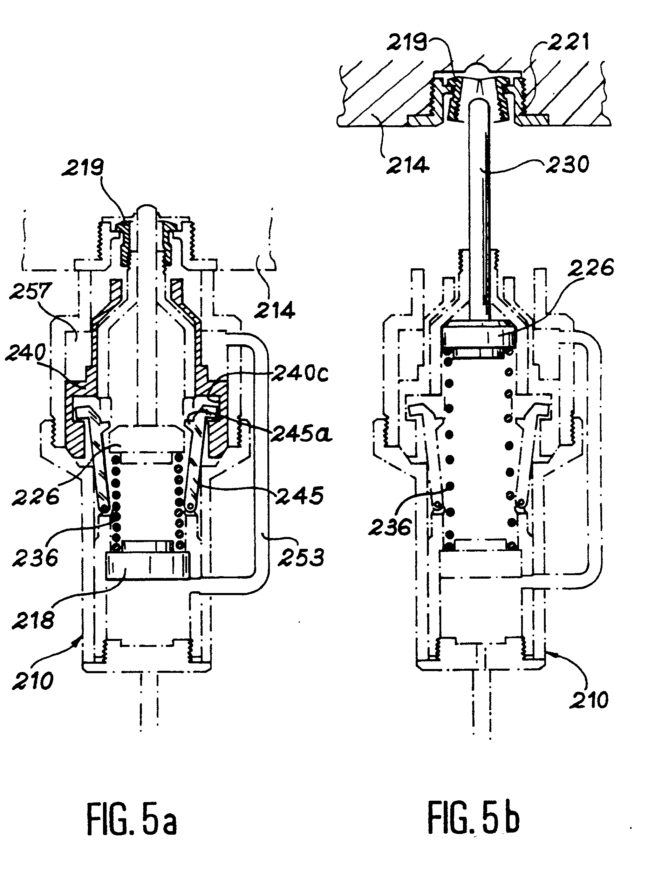

Dès que le piston 218 atteint sa position d'actionnement comme l'illustre la figure 5a, la chambre annulaire 257 est mise en communication avec la chambre de détonation par le tube 253. La pression régnant dans la chambre 257 s'accroît alors rapidement, ce qui a pour effet de déplacer le piston 240 en éloignement de la pièce 214.

Dans un premier temps, ce déplacement du piston 240 libère l'écrou fendu 219, de sorte que celui-ci n'est plus en prise avec l'extrémité filetée de la pièce tubulaire 213. La séparation des pièces 210 et 214 est alors réalisée.

Dans la suite de son déplacement en éloignement de la pièce 214, le piston 240 amène l'évidement 240c au niveau des extrémités des doigts 245. Ces derniers pivotent alors autour de leurs axes pour dégager le piston 226. Ce pivotement des doigts 245 est assuré par la forme biseautée donnée aux surfaces en contact du piston 226 et des ergots 245a, sous l'action du ressort 236. Celui-ci libère alors la force qu'il a emmagasinée précédemment, ce qui a pour effet de déplacer le piston 226 et la tige de poussée 230 vers la pièce 214. L'éjection est alors réalisée avec des paramètres vitesse et accélération parfaitement dosés, comme l'illustre la figure 5b.

Dans la réalité, les mouvements des pièces qui constituent le mécanisme de l'invention s'effectuent de façon excessivement rapide compte tenu de la libération brutale de l'énergie emmagasinée dans la charge explosive.

Bien entendu, l'invention n'est pas limitée aux modes de réalisation qui viennent d'être décrits à titre d'exemple. On rappellera notamment à ce sujet que l'énergie motrice servant à actionner le mécanisme de l'invention n'est pas nécessairement fournie par un dispositif pyrotechnique fonctionnant en régime détonique. Ainsi, l'énergie motrice assurant l'actionnement du mécanisme peut aussi être fournie par tout dispositif de mise en pression pneumatique, hydraulique ou mécanique, si l'énergie emmagasinée dans ce dispositif est suffisamment élevée pour que l'énergie disponible après une période de stockage pouvant atteindre plusieurs années reste surabonbante par rapport à l'énergie nécessaire à l'éjection, malgré la diminution dans le temps de l'énergie stockée dans de tels dispositifs de mise en pression. Dans ces conditions, l'énergie motrice surabondante peut être formée par exemple par un vérin à gaz, un dispositif pyrotechnique fonctionnant en régime de combustion, un vérin à combustion de poudre ou un mécanisme à ressort précontraint.

## Revendications

1. Mécanisme pour commander l'écartement de deux pièces (10, 14) en contact par une force d'intensité donnée, à partir d'une énergie motrice surabondante, caractérisé en ce qu'il comprend un organe de poussée (26) apte à se déplacer dans une première (10) des pièces vers la deuxième pièce (14), à partir d'une position de repos dans laquelle une extrémité de l'organe de poussée est en contact avec la deuxième pièce, un organe moteur (18) apte à se déplacer avec une course donnée entre une position de repos et une position d'actionnement à l'intérieur de la première pièce (10), sous l'effet de ladite énergie motrice, et un élément élastique (36) interposé entre l'organe moteur (18) et l'organe de poussée (26), de telle sorte qu'un déplacement de l'organe moteur (18) de sa position de repos à sa position d'actionnement a pour effet d'appliquer ladite force d'intensité donnée sur la deuxième pièce (14), par l'intermédiaire de l'organe de poussée (26).

2. Mécanisme selon la revendication 1, caractérisé en ce qu'il comprend des moyens de verrouillage (40, 44) de l'organe de poussée (26) en position de repos à l'intérieur de la première pièce (10) et des moyens (46) pour commander automatiquement le déverrouillage des moyens de verrouillage lorsque l'organe moteur (18) occupe sa position d'actionnement.

3. Mécanisme selon l'une quelconque des revendications 1 et 2, caractérisé en ce que l'organe moteur comprend un piston moteur (18) apte à coulisser de façon étanche dans un alésage (16) formé dans la première pièce (10), ladite énergie motrice étant créée par un dispositif pyrotechnique (24) fonctionnant en régime détonique et agissant dans ledit alésage, d'un côté du piston moteur opposé à l'élément élastique (36).

4. Mécanisme selon les revendications 2 et 3, caractérisé en ce que les moyens de verrouillage comprennent un piston de verrouillage (40) apte à se déplacer dans la première pièce entre une position de verrouillage bloquant l'organe de poussée (26) en position de repos et une position de déverrouillage libérant l'organe de poussée, les moyens de commande de déverrouillage comprenant un passage (46) reliant ledit alésage (16) à une chambre délimitée dans la première pièce (10) par une face du piston de verrouillage (40), une augmentation de pression dans cette chambre ayant pour effet un déplacement du piston de verrouillage en position de déverrouillage, ledit passage (46) débouchant dans ledit alésage (16) en un emplacement tel qu'il n'est situé du côté du piston moteur (18) opposé à l'élément élastique (36) que lorsque ce piston moteur est en position d'actionnement.

5. Mécanisme selon la revendication 4, caractérisé en ce que le piston de verrouillage (40) est mobile dans la première pièce (10) selon une direction approximativement perpendiculaire à une direction de déplacement de l'organe de poussée (26) à partir de sa position de repos, ce piston de verrouillage comprenant une tige de verrouillage (44) qui bloque l'organe de poussée dans cette position de repos lorsque le piston de verrouillage (40) est en position de verrouillage.

6. Mécanisme selon la revendication 4, caractérisé en ce que le piston de verrouillage est un piston annulaire (240) entourant l'organe de poussée (226) et mobile dans la première pièce (210) selon une direction approximativement parallèle à une direction de déplacement de l'organe de poussée à partir de sa position de repos, ce piston annulaire (240) encerclant au moins un organe de blocage (245) monté dans la première pièce, de façon à maintenir cet organe de blocage en prise sur l'organe de pousée (226), lorsque le piston annulaire (240) est en position de verrouillage.

7. Mécanisme selon l'une quelconque des revendications 1 à 6, caractérisé en ce que l'organe moteur (18) et l'organe de poussée (26) sont montés coaxialement à l'intérieur de la première pièce (10).

8. Mécanisme selon la revendication 7, caractérisé en ce que l'élément élastique est un ressort de compression (36) interposé entre l'organe moteur (18) et l'organe de poussée (26), ces deux organes étant disposés bout à bout à l'intérieur de la première pièce (10).

9. Mécanisme selon l'une quelconque des revendications 1 à 7, caractérisé en ce que l'élément élastique est une capacité gazeuse (137, 139).

10. Mécanisme selon la revendication 9, caractérisé en ce que l'organe moteur comprend un piston annulaire (118) coulissant de façon étanche dans un espace annulaire formé dans la première pièce (110) autour d'un organe tubulaire (113) monté coaxialement audit piston annulaire, la position d'actionnement de ce piston annulaire (118) étant plus éloignée de la deuxième pièce (114) que sa position de repos, l'organe de poussée comprenant un piston de poussée (126) coulissant de façon étanche dans un alésage central formé dans ledit organe tubulaire (113), la capacité gazeuse étant constituée de parties (137, 139) de l'espace annulaire et de l'alésage central situées respectivement du côté du piston annulaire (118) et du piston de poussée (126), le plus éloigné de la deuxième pièce (114), lesdites parties communiquant entre elles par au moins un trou (127) formé dans l'organe tubulaire (113).

11. Mécanisme selon l'une quelconque des revendications précédentes, caractérisé en ce que la première pièce comprend un organe tubulaire (113, 213) entourant l'organe de poussée (126, 226) et dont une extrémité adjacente à la deuxième pièce (114, 214) est normalement en prise sur un organe de liaison (119, 219) porté par la deuxième pièce, lorsqu'une partie tubulaire de séparation (118a, 240a) montée dans la première pièce encercle cet organe de liaison, ladite partie tubulaire de séparation étant sensible à l'énergie motrice pour se déplacer en éloignement de la deuxième pièce et libérer l'organe de liaison (119, 219).

12. Mécanisme selon les revendications 10 et 11, caractérisé en ce que la partie tubulaire de séparation (118a) est solidaire du piston annulaire (118).

13. Mécanisme selon les revendications 6 et 11, caractérisé en ce que la partie tubulaire de séparation (240a) est solidaire du piston de verrouillage (240).

## Patentansprüche

1. Mechanismus zum Steuern des Trennens von zwei durch eine Kraft gegebener Größe in Verbindung stehenden Teilen (10, 14) ausgehend von einer überschüssigen Bewegungsenergie, dadurch gekennzeichnet, daß er umfaßt : ein Stoßelement (26), das geeignet ist, sich in einem ersten (10) der Teile zum zweiten Teil (14) ausgehend von einer Ruhestellung, in der ein Ende des Stoßelements in Kontakt mit dem zweiten Teil ist, zu bewegen, ein Motorelement (18), das geeignet ist, sich mit einer gegebenen Bahn zwischen einer Ruhestellung und einer Aktionsstellung im Innern des ersten Teils (10) unter der Einwirkung der Bewegungsenergie zu bewegen, und ein elastisches Element (36), das zwischen dem Motorelement (18) und dem Stoßelement (26) so angeordnet ist, daß eine Bewegung des Motorelements (18) aus seiner Ruhestellung in seine Aktionsstellung zur Wirkung hat, diese Kraft gegebener Größe über das Stoßelement (16) auf das zweite Teil (14) anzuwenden.

2. Mechanismus nach Anspruch 1, dadurch gekennzeichnet, daß er eine Vorrichtung (40, 44) zum Verriegeln des Stoßelements (26) in der Ruhestellung im Innern des ersten Teils (10) und eine Vorrichtung (46) zum automatischen Steuern der Entriegelung der Verriegelungsvorrichtung, sobald das Motorelement (18) seine Aktionsstellung einnimmt, umfaßt.

3. Mechanismus nach einem der Ansprüche 1 und 2, dadurch gekennzeichnet, daß das Motorelement einen Motorkolben (18) umfaßt, der geeignet ist, dicht in einer in dem ersten Teil (10) geformten Bohrung (16) zu gleiten, wobei die Bewegungsenergie durch eine pyrotechnische Vorrichtung (24) erzeugt wird, die im Detonationsbereich arbeitet und in der Bohrung auf der einen Seite des Motorkolbens gegenüber dem elastischen Element (36) arbeitet.

4. Mechanismus nach den Ansprüchen 2 und 3, dadurch gekennzeichnet, daß die Verriegelungsvorrichtung einen Verriegelungskolben (40) umfaßt, der geeignet ist, sich in dem ersten Teil zwischen einer Verschlußstellung, die das Stoßelement (26) in der Ruhestellung blockiert, und einer Entriegelungsstellung, die das Stoßelement befreit, zu bewegen, wobei die Steuerungsvorrichtung für die Entriegelung einen Durchgang (46) umfaßt, der die Bohrung (16) mit einer durch eine Seite des Verriegelungskolbens (40) abgegrenzten Kammer im ersten Teil (10) verbindet, wobei eine Druckzunahme in dieser Kammer eine Bewegung des Verriegelungskolbens in die Entriegelungsstellung zur Folge hat, wobei der Durchgang (46) in die Bohrung (16) an einer derartigen Stelle mündet, daß er nur dann auf der dem elastischen Element (36) gegenüberliegenden Seite des Motorkolbens (18) angeordnet ist, wenn sich der Motorkolben in der Aktionsstellung befindet.

5. Mechanismus nach Anspruch 4, dadurch gekennzeichnet, daß der Verriegelungskolben (40) in dem ersten Teil (10) entlang einer ungefähr zu einer Bewegungsrichtung des Stoßelements (26) ausgehend von seiner Ruhestellung senkrechten Richtung beweglich ist, wobei der Verriegelungskolben einen Verriegelungsschaft (44) umfaßt, der das Stoßelement in dieser Ruhestellung blockiert, wenn der Verriegelungskolben (40) in der Verriegelungsstellung ist.

6. Mechanismus nach Anspruch 4, dadurch gekennzeichnet, daß der Verriegelungskolben ein ringförmiger Verriegelungskolben (2040) ist, der das Stoßelement (226) umgibt und in dem ersten Teil (210) entlang einer ungefähr zu einer Bewegungsrichtung des Stoßelements ausgehend von seiner Ruhestellung parallelen Richtung beweglich ist, wobei dieser ringförmige Kolben (240) wenigstens ein Blockierelement (245), das in dem ersten Teil montiert ist, so umgibt, daß dieses Blockierelement das Stoßelement (226) im Griff hält, wenn der ringförmige Kolben (240) in der Verriegelungsstellung ist.

7. Mechanismus nach einem der Ansprüche 1 bis 6, dadurch gekennzeichnet, daß das Motorelement (18) und das Stoßelement (26) koaxial im Innern des ersten Teils (10) montiert sind.

8. Mechanismus nach Anspruch 7, dadurch gekennzeichnet, daß das elastische Element eine Kompressionsfeder (36) ist, die zwischen dem Motorelement (18) und dem Stoßelement (26) angeordnet ist, wobei die beiden Element Ende an Ende im Innern des ersten Teils (10) angeordnet sind.

9. Mechanismus nach einem der Ansprüche 1 bis 7, dadurch gekennzeichnet, daß das elastische Element ein Gasraum (137, 139) ist.

10. Mechanismus nach Anspruch 9, dadurch gekennzeichnet, daß das Motorelement einen ringförmigen Kolben (118) umfaßt, der dicht in einem ringförmigen, in dem ersten Teil (110) um ein röhrenförmiges Element (113), das koaxial mit dem ringförmigen Kolben montiert ist, geformten Raum gleitet, wobei die Aktionsstellung dieses ringförmigen Kolbens (118) weiter von dem zweiten Teil (114) entfernt ist als seine Ruhestellung, wobei das Stoßelement einen Stoßkolben (126) umfaßt, der dicht in einer zentralen, in dem röhrenförmigen Element (113) geformten Bohrung gleitet, wobei der Gasraum aus Bereichen (137, 139) des ringförmigen Raums und der zentralen Bohrung besteht, die jeweils auf der Seite des ringförmigen Kolbens (118) und des Stoßkolbens (126) angeordnet sind, der am weitesten von dem zweiten Teil (114) entfernt ist, wobei diese Bereiche untereinander über wenigstens ein in dem röhrenförmigen Element (113) geformtes Loch (127) in Verbindung stehen.

11. Mechanismus nach einem der vorhergehenden Ansprüche, dadurch gekennzeichnet, daß das erste Teil ein röhrenförmiges Element (113, 213) umfaßt, das das Stoßelement (126, 226) umgibt und von dem ein an das zweite Teil (114, 214) angrenzendes Ende normalerweise ein Verbindungselement (119, 219) im Griff hat, das von dem zweiten Teil gehalten wird, wenn ein röhrenförmiger Trennbereich (118a, 240a), der in dem ersten Teil montiert ist, dieses Verbindungselement umgibt, wobei der röhrenförmige Trennbereich auf die Bewegungsenergie reagiert, um sich von dem zweiten Teil entfernend zu bewegen und das Verbindungselement (119, 219) zu befreien.

12. Mechanismus nach den Ansprüchen 10 und 11, dadurch gekennzeichnet, daß der röhrenförmige Trennbereich (118a) mit dem ringförmigen Kolben (118) verbunden ist.

13. Mechanismus nach den Ansprüchen 6 und 11, dadurch gekennzeichnet, daß der röhrenförmige Trennbereich (240a) mit dem Verriegelungskolben (240) verbunden ist.

## Claims

1. Mechanism for controlling the spacing apart of two pieces (10, 14) in contact, with a force of given intensity, using superabundant driving energy, characterised in that it comprises a pushing member (26) capable of being displaced, inside a first one (10) of the pieces, towards the second piece (14) from a rest position in which one end of the pushing member is in contact with the second piece, a driving member (18) capable of being displaced with a given travel between a rest position and an actuating position inside the first piece (10) under the effect of the said driving energy, and an elastic element (36) placed between the driving member (18) and the pushing member (26) in such a way that a displacement of the driving member (18) from its rest position into its actuating position causes the said force of given intensity to be applied to the second piece (14) via the pushing member (26).

2. Mechanism according to Claim 1, characterised in that it comprises means (40, 44) for locking the pushing member (26) in the rest position inside the first piece (10), and means (46) for automatically controlling the unlocking of the locking means when the driving member (18) occupies its actuating position.

3. Mechanism according to either of Claims 1 and 2, characterised in that the driving member comprises a driving piston (18) capable of sliding in sealing fashion in a bore (16) formed in the first piece (10), the said driving energy being created by a pyrotechnic device (24) operating in detonative mode and acting inside the said bore, on a side of the driving piston opposite the elastic element (36).

4. Mechanism according to Claims 2 and 3, characterised in that the locking means comprise a locking piston (40) capable of being displaced inside the first piece between a locking position immobilising the pushing member (26) in the rest position, and an unlocking position freeing the pushing member, the means for controlling the unlocking comprising a passage (46) connecting the said bore (16) to a chamber defined, inside the first piece (10), by one face of the locking piston (40), increasing the pressure inside this chamber causing the locking piston to be displaced into an unlocking position, the said passage (46) opening out in the said bore (16) at a location such that it is situated on the side of the driving piston (18) opposite the elastic element (36) only when the driving piston is in the actuating position.

5. Mechanism according to Claim 4, characterised in that the locking piston (40) can move inside the first piece (10) in a direction approximately perpendicular to a direction of displacement of the pushing member (26) from its rest position, this locking piston comprising a locking rod (44) which immobilises the pushing member in this rest position when the locking piston (40) is in the locking position.

6. Mechanism according to Claim 4, characterised in that the locking piston is an annular piston (240) surrounding the pushing member (226) and capable of moving inside the first piece (210) in a direction approximately parallel to a direction of displacement of the pushing member from its rest position, this annular piston (240) encircling at least one immobilising member (245) mounted inside the first piece, so as to hold this immobilising member engaged on the pushing member (226) when the annular piston (240) is in the locking position.

7. Mechanism according to any one of Claims 1 to 6, characterised in that the driving member (18) and the pushing member (26) are mounted coaxially inside the first piece (10).

8. Mechanism according to Claim 7, characterised in that the elastic element is a compression spring (36) placed between the driving member (18) and the pushing member (26), these two members being arranged end to end inside the first piece (10).

9. Mechanism according to any one of Claims 1 to 7, characterised in that the elastic element is a gas volume (137, 139).

10. Mechanism according to Claim 9, characterised in that the driving member comprises an annular piston (118) sliding in a sealing fashion inside an annular space formed in the first piece (110) around a tubular member (113) mounted coaxially with the said annular piston, the actuating position of this annular piston (118) being further from the second piece (114) than its rest position, the pushing member comprising a pushing piston (126) sliding in a sealing fashion in a central bore formed in the said tubular member (113), the gas volume consisting of parts (137, 139) of the annular space and of the central bore, situated respectively on the side of the annular piston (118) and of the pushing piston (126) furthest from the second piece (114), the said parts being interconnected by at least one hole (127) formed in the tubular member (113).

11. Mechanism according to any one of the preceding claims, characterised in that the first piece comprises a tubular member (113, 213) surrounding the pushing member (126, 226) and one end of which, adjacent to the second piece (114, 214), normally engages on a joining member (119, 219) carried by the second piece, when a tubular separation part (118a, 240a) mounted in the first piece encircles this joining member, the said tubular separation part being sensitive to the driving energy in order to be displaced, moving away from the second piece, and to free the joining member (119, 219).

12. Mechanism according to Claims 10 and 11, characterised in that the tubular separation part (118a) is integral with the annular piston (118).

13. Mechanism according to Claims 6 and 11, characterised in that the tubular separation part (240a) is integral with the locking piston (240).

FIG. 1

FIG. 2

FIG. 3a   FIG. 3b   FIG. 3c

FIG. 4

FIG. 5a

FIG. 5b